Europäisches Patentamt

European Patent Office

Office européen des brevets

(11) Numéro de publication: **0 152 322**
A1

(12) **DEMANDE DE BREVET EUROPEEN**

(21) Numéro de dépôt: 85400116.1

(22) Date de dépôt: 24.01.85

(51) Int. Cl.⁴: **A 47 C 31/10**

(30) Priorité: 24.01.84 FR 8401063

(43) Date de publication de la demande:
21.08.85 Bulletin 85/34

(84) Etats contractants désignés:
AT BE CH DE FR GB IT LI LU NL SE

(71) Demandeur: Kraszewski, Richard
Odars
F-31450 Montgiscard(FR)

(71) Demandeur: Combet, Jacques

F-31340 Mirepoix sur Tarn(FR)

(71) Demandeur: Seube, Serge

F-65250 La Barthe de Deste(FR)

(72) Inventeur: Kraszewski, Richard
Odars
F-31450 Montgiscard(FR)

(72) Inventeur: Combet, Jacques

F-31340 Mirepoix sur Tarn(FR)

(72) Inventeur: Seube, Serge

F-65250 La Barthe de Deste(FR)

(74) Mandataire: Bressand, Georges et al,
c/o CABINET LAVOIX 2 Place d'Estienne d'Orves
F-75441 Paris Cedex 09(FR)

(54) Revêtement pour siège de véhicule automobile.

㉗ Le revêtement (1) comprend une nappe de boules (2) percées d'un trou cylindrique (3) dont l'axe passe par le centre des boules (2). Ces boules (2) étant reliées entre elles par un réseau de fils (4,5,6,7) souples passant par les trous (3) et ces boules (2) étant mobiles en rotation autour du ou des fils (4,5,6,7) passant par les trous (3).

FIG.4

EP 0 152 322 A1

La présente invention concerne un revêtement pour siège de véhicule automobile.

Les sièges de véhicule automobile actuels sont de plus en plus confortables et limitent au maximum les mouvements des parties du corps en contact avec le siège. Cette position agréable lorsqu'on monte dans le véhicule provoque, au bout d'un certain temps, des troubles musculaires et des troubles de la circulation sanguine.

La présente invention vise à supprimer ces inconvénients tout en conservant le confort initial des sièges de véhicule automobile,en fournissant un dispositif aisément adaptable sur les sièges de véhicules automobiles sans aucune modification de ceux-ci.

A cet effet, la présente invention a pour objet un revêtement pour siège de véhicule automobile, caractérisé en ce qu'il comprend une nappe de boules percées d'un trou cylindrique dont l'axe passe par le centre des boules, ces boules étant reliées entre elles par un réseau de fils souples passant par les trous et ces boules étant mobiles en rotation autour du ou des fils passant par les trous.

Les boules peuvent avoir en pratique un diamètre de 10 à 20 mm. Le trou cylindrique traversant chaque boule peut avoir un diamètre interne de 1 à 6 mm. Les boules peuvent être constituées de différents matériaux tels que le bois, les métaux, les matières plastiques.

Les fils souples utilisés pour relier les boules peuvent être constitués d'une ficelle, d'un fil de crin, d'un fil métallique ou d'un fil de matière plastique.

Les boules sont avantageusement reliées par le réseau de fils de façon à être jointives. Le réseau de fils est de préférence à maille carrée. La maille carrée peut résulter d'un tissage classique ou d'un tissage plus complexe avec torsades ou noeuds.

Toutefois, dans un mode d'assemblage préféré, les axes des trous cylindriques des boules sont disposés suivant les éléments d'un quadrillage et les boules internes sont reliées entre elles par deux ensembles de fils ayant des trajets en créneau en opposition de phase le long du quadrillage.

Les vibrations et mouvements dus au véhicule agitent les boules ce qui provoque des massages continuels du dos du conducteur. La circulation sanguine en est facilitée et une sensation de bien-être et de détente atténue la fatigue de la conduite.

En outre, pendant les fortes chaleurs, ce revêtement maintient une lame d'air entre le dos du conducteur et le dossier du siège ce qui évite d'avoir le désagrément des vêtements humides et collés.

De par le mouvement continuel des boules, le tissu des vêtements ne reste pas en place, ce qui évite qu'ils se froissent.

L'invention est exposée ci-après plus en détail à l'aide de dessins représentant seulement un mode d'exécution.

Sur ces dessins :

la Fig. 1 est une vue en coupe d'un revêtement selon l'invention ne comprenant qu'un premier ensemble de fils;

la Fig. 2 est une vue en coupe du même revêtement mais ne comprenant qu'un deuxième ensemble de fils;

la Fig. 3 est une vue en coupe du revêtement avec la totalité du réseau de fils;

la Fig. 4 est une vue en perspective d'un revêtement selon l'invention disposé sur le siège d'un véhicule automobile.

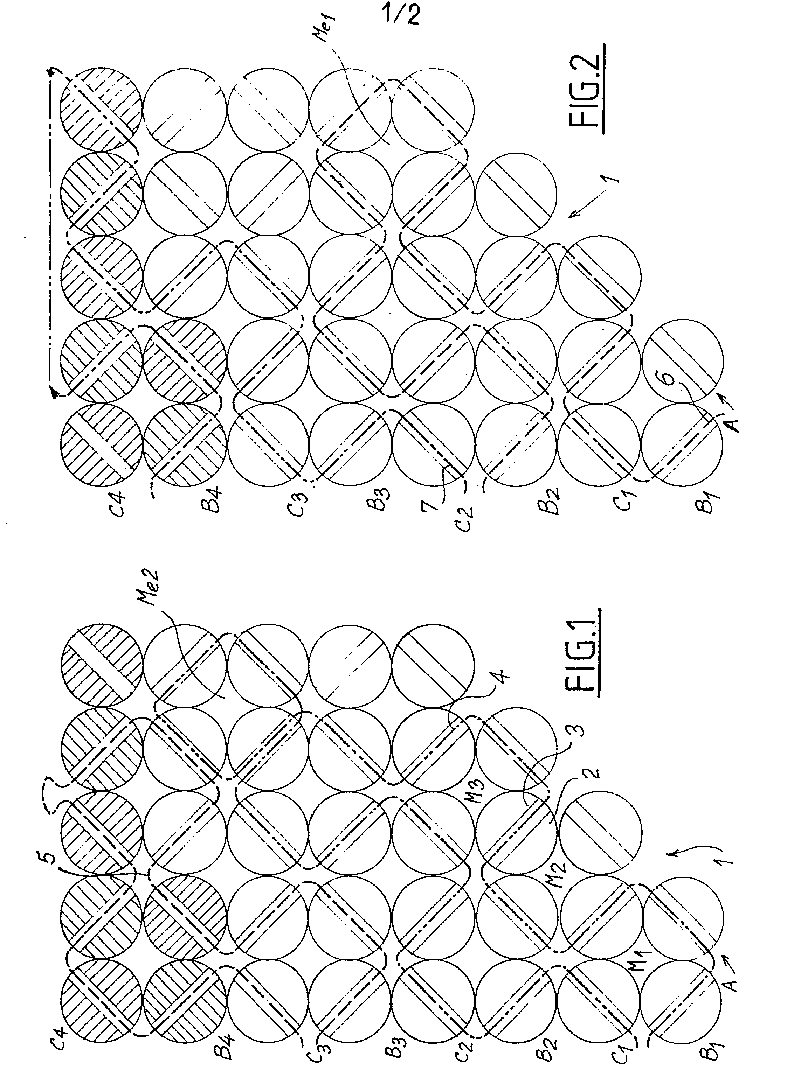

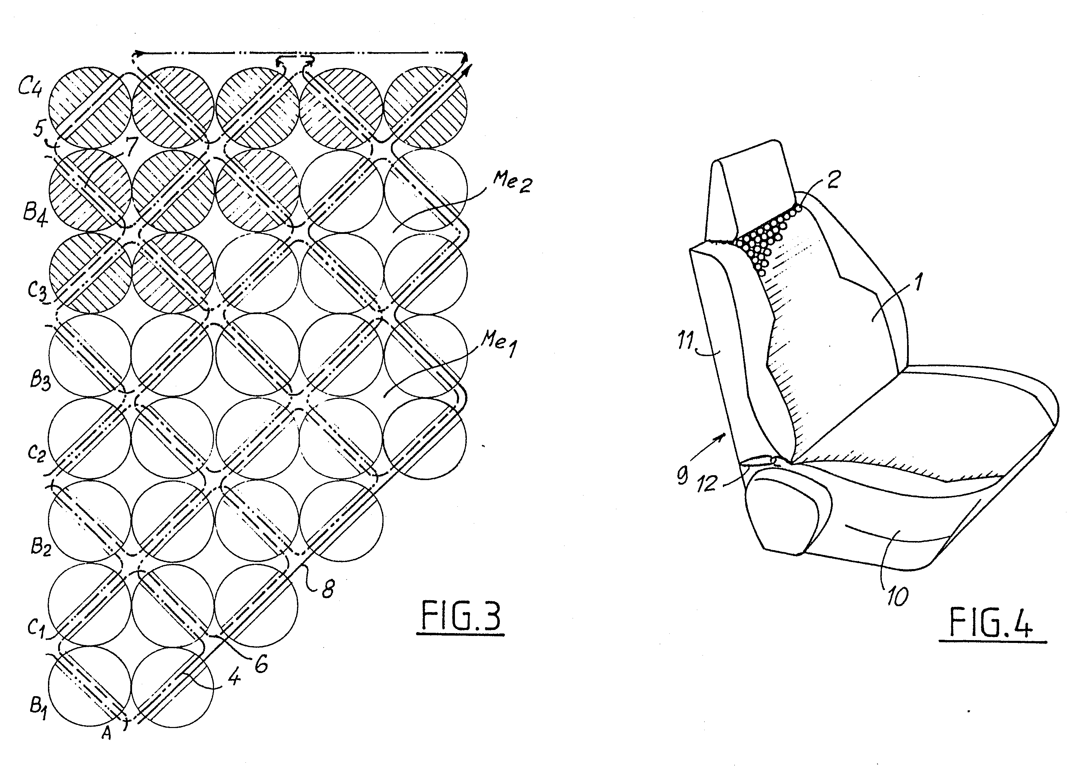

Pour faciliter la compréhension, le revêtement représenté sur la Fig. 3 a été également représenté sur la Fig. 1 avec un premier ensemble de fils et sur la Fig. 2 avec un deuxième ensemble de fils.

Le revêtement 1 représenté sur les Fig. 1, 2 et 3 comprend une nappe de boules 2 jointives qui sont disposées suivant un quadrillage à maille carrée. Ces boules
présentent toutes un trou cylindrique 3 dont l'axe passe
par le centre des boules.

Cette nappe comprend une rangée de boules en bordure A dont les axes des trous 3 sont disposés suivant
une ligne parallèle au bord de la nappe.

Chaque boule de la rangée A est en contact avec
deux boules de la rangée suivante B dont les axes des
trous 3 sont perpendiculaires aux axes des trous 3 de la
rangée A.

Chaque boule de la rangée $B_1$ est également en contact avec deux boules de la rangée suivante $C_1$ dont les
axes des trous 3 sont perpendiculaires à ceux de la rangée $B_1$ et donc parallèles à ceux de la rangée A.

Les deux rangées suivantes $B_2$ et $C_2$ sont disposées
respectivement comme les rangées $B_1$ et $C_1$. Il en est de
même pour les rangées suivantes $B_3$, $C_3$, ...

Le motif formé par quatre boules jointives deux à
deux est un motif à maille carrée.

On a représenté sur la Fig. 1 un premier ensemble
de fils reliant les boules.

Un premier fil 4 est représenté en traits mixtes
et un deuxième fil 5 est représenté en traits interrompus
longs.

Dans une première partie, le fil 4 relie des boules
appartenant aux rangées A, $B_1$ et $C_1$. Le fil a un trajet en
créneau, c'est-à-dire qu'il traverse successivement une
boule de la rangée A, la boule de la rangée $B_1$ qui est en
contact avec la première boule et appartient à la même
maille $M_1$, la boule de la rangée $C_1$ qui est en contact
avec la seconde boule et appartient à la maille suivante
$M_2$, puis l'autre boule de la rangée B qui est en contact
avec la troisième boule et appartient à la même maille $M_2$,
puis de nouveau une boule de la rangée A mais qui appartient à la maille suivante $M_3$.

A l'extrémité, le fil 4 traverse une boule de la

rangée $C_1$, puis une boule de la rangée $B_2$ appartenant à la maille d'extrémité $Me_2$, ainsi que les trois autres boules de cette maille d'extrémité $Me_2$, repasse à travers la boule de la rangée $B_2$ de la même maille $Me_2$, puis reprend un trajet en créneau entre les rangées $C_2$ et $C_1$.

Le fil 5 a un trajet identique à celui du fil 4 mais entre les rangées $C_2$ et $C_3$ puis $C_3$ et $C_4$. Ce trajet est en phase avec celui du fil 4.

Les fils tels que 4 et 5 constituent ainsi un premier ensemble de fils.

Un deuxième ensemble de fils est représenté sur la Fig. 2.

Un premier fil 6 est représenté en traits interrompus longs et un deuxième fil 7 est représenté en traits mixtes.

Dans une première partie, le fil 6 réunit des boules des rangées A, $B_1$ et $C_1$ et a un trajet en créneau en opposition de phase par rapport au fil 4, c'est-à-dire qu'il ne traverse que les boules des rangées A et $C_1$ qui ne sont pas traversées par le fil 4. Les boules de la rangée $B_1$ sont traversées par les deux fils.

A l'extrémité, le fil 6 traverse les quatre boules de la maille d'extrémité $Me_1$, puis traverse une boule de la rangée $B_2$ et a une deuxième partie correspondant à un trajet en créneau entre les boules des rangées $C_1$ et $C_2$.

Le fil 7 a un trajet identique à celui du fil 4 mais entre les rangées $C_2$ et $C_3$ puis $C_3$ et $C_4$. Ce trajet est en phase avec celui du fil 6.

Le revêtement complet représenté sur la Fig. 3 comprend, en plus des fils 4 et 5 du premier ensemble et des fils 6 et 7 du deuxième ensemble, un fil de bordure 8 qui traverse les boules de la rangée A et les boules d'extrémité des rangées $B_1$, $C_1$, $B_2$, $C_2$...

Ainsi, toutes les boules sont traversées par deux fils de liaison.

On a représenté sur la Fig. 4 un siège 9 de véhicule automobile muni d'un revêtement 1. La forme du revêtement 1 est adaptée à la forme du siège. Une première partie vient recouvrir l'assise 10 du siège 9, tandis qu'une deuxième partie vient recouvrir le dossier 11 du siège 9. Des éléments de tension tels que 12 sont prévus pour maintenir en place le revêtement 1 sur le siège 9.

## REVENDICATIONS

1. Revêtement (1) pour siège de véhicule automobile, caractérisé en ce qu'il comprend une nappe de boules (2) percées d'un trou cylindrique (3) dont l'axe passe par le centre des boules, ces boules étant reliées entre elles par un réseau de fils souples passant par les trous et ces boules étant mobiles en rotation autour du ou des fils (4,5,6,7,8) passant par les trous.

2. Revêtement selon la revendication 1, caractérisé en ce que les boules sont jointives.

3. Revêtement selon la revendication 2, caractérisé en ce que les boules sont reliées entre elles par un réseau à maille carrée.

4. Revêtement selon la revendication 3, caractérisé en ce que les axes des trous cylindriques (3) des boules sont disposés suivant les éléments d'un quadrillage et les boules (2) internes sont reliées entre elles par deux ensembles de fils (4,5; 6,7) ayant des trajets en créneau en opposition de phase le long du quadrillage.

FIG.1

FIG.2

1/2

0152322

FIG.3

FIG.4

2/2

0152322

**0152322**
Numéro de la demande

Office européen
des brevets

**RAPPORT DE RECHERCHE EUROPEENNE**

EP  85 40 0116

## DOCUMENTS CONSIDERES COMME PERTINENTS

| Categorie | Citation du document avec indication en cas de besoin. des parties pertinentes | Revendication concernee | CLASSEMENT DE LA DEMANDE (Int Cl 4) |
|---|---|---|---|
| Y | US-A-3 226 157  (REINFELDT) <br> * colonne 1, lignes 10-19; figure 1 * | 1 | A 47 C   31/10 |
| Y | DE-A-1 801 863  (KRILL) <br> * Revendications 1,2 * | 1 | |
| A | | 2-4 | |
| A | DE-C-  147 741  (VON ZWIKLITZ) <br> * Revendication * | 1,2 | |

---

DOMAINES TECHNIQUES
RECHERCHES (Int. Cl.4)

A 47 C
D 04 D

Le présent rapport de recherche a été établi pour toutes les revendications

| Lieu de la recherche <br> LA HAYE | Date d'achèvement de la recherche <br> 29-03-1985 | Examinateur <br> SARRE K.J.K.TH. |
|---|---|---|